# EUROPEAN PATENT APPLICATION

(11) **EP 3 244 294 A1**
(43) Date of publication of application: **15.11.2017**
(21) Application number: 16751893.5
(22) Date of filing: 20.01.2016
(51) Int. Cl.: G06F 3/0487

(54) **VOICEPRINT-RECOGNITION-BASED SECURITY PROTECTION METHOD AND DEVICE**

(30) Priority: 16.02.2015 CN 201510085577
(71) Applicant: ZTE Corporation, Shenzhen, Guangdong 518057 (CN)
(72) Inventor: QIN, Chunhua, Shenzhen Guangdong 518057 (CN); ZHU, Changbao, Shenzhen Guangdong 518057 (CN); BAI, Xue, Shenzhen Guangdong 518057 (CN); YUAN, Hao, Shenzhen Guangdong 518057 (CN)
(74) Representative: HGF Limited
(86) International application number: PCT/CN2016/071477
(87) International publication number: WO 2016/131362

(57) **Abstract**

Provided is a voiceprint-recognition-based security protection method. The method includes: acquiring voice data of a current user of a terminal and extracting voiceprint characteristic information from the voice data; matching the extracted voiceprint characteristic information of the current user of the terminal with a pre-saved voiceprint model of an owner of the terminal, and judging whether the current user of the terminal is the owner of the terminal; and when judging that the current user of the terminal is not the owner of the terminal, performing security protection processing on the terminal.

## Description

### Technical Field

The document relates to but not limited to the technical field of communication, in particular to a voiceprint-recognition-based security protection method and device.

### Background

With the continuous progress and development of science and technology, people's life becomes increasingly diversified and various electronic terminals become an indispensable part of our life. However, there is vulnerability in the security of these electronic terminals when used.

Although various strong functions, such as screen locking and machine locking and the like, emerge, the problems that the electronic terminals are secretly used without permission of owners of the terminal and the owners of the terminals do not know the use at all under certain situations (for example, the screens of the electronic terminals are not locked, or fraudulent users have already known unlocking methods) still cannot be solved. Once these situations occur, troubles and even huge losses are possibly caused to the owners of the terminals.

Therefore, the use security of the electronic terminals needs to be further guaranteed.

### Summary

What is described below is a summary of the subject described in detail in this document. The summary is not used for limiting the protection scope of the claims.

Embodiments of the present invention provide a voiceprint-recognition-based security protection method and device, which can monitor and prevent a terminal from being fraudulently used through a voiceprint technology and prevent the owner of the terminal from suffering a loss.

An embodiment of the present invention provides a voiceprint-recognition-based security protection method, including:
collecting voice data of a current user of a terminal and extracting voiceprint characteristic information from the voice data;
matching the extracted voiceprint characteristic information of the current user of the terminal with a pre-saved voiceprint model of an owner of the terminal and judging whether the current user of the terminal is the owner of the terminal; and
when judging that the current user of the terminal is not the owner of the terminal, performing security protection processing on the terminal.

In an exemplary embodiment, the method of matching the extracted voiceprint characteristic information of the current user of the terminal with a pre-saved voiceprint model of an owner of the terminal and judging whether the current user of the terminal is the owner of the terminal includes:
matching the extracted voiceprint characteristic data of the current user of the terminal with the pre-saved voiceprint model of the owner of the terminal and calculating a similarity between voiceprint characteristics of the current user of the terminal and the voiceprint model of the owner of the terminal; and
if the similarity between the voiceprint characteristics of the current user of the terminal and the voiceprint model of the owner of the terminal is higher than or equal to a monitoring threshold, judging that the current user of the terminal is the owner of the terminal; and if the similarity between the voiceprint characteristics of the current user of the terminal and the voiceprint model of the owner of the terminal is lower than the monitoring threshold, judging that the current user of the terminal is not the owner of the terminal.

In an exemplary embodiment, the method further includes: collecting voice training data of the owner of the terminal, and extracting voiceprint characteristics from the voice training data, and establishing a voiceprint model according to the extracted voiceprint characteristics and saving the voiceprint model.

In an exemplary embodiment, performing security protection processing on the terminal includes:
sending monitoring information to a preset monitoring end, starting a timer, and if an instruction returned by the monitoring end is received before the timer times out, performing corresponding security protection processing according to the received instruction; and if any instruction returned by the monitoring end is still not received until the timer times out, when judging that a current use situation of the terminal satisfies an alarm condition, performing super screen locking processing on the terminal, herein the terminal after super screen locking is only capable of being unlocked by the owner of the terminal through a voice.

In an exemplary embodiment, performing corresponding security protection processing according to the received instruction includes:
when the instruction returned by the monitoring end is to perform super screen locking, performing the super screen locking processing on the terminal, herein the terminal after the super screen locking is only capable of being unlocked by the owner of the terminal through the voice; and/or
when the instruction returned by the monitoring end is to perform data protection, deleting personal designated data of the owner of the terminal saved in the terminal; and/or
when the instruction returned by the monitoring end is to enter a security mode, restricting the current user of the terminal to performing a designated restricted operation.

In an exemplary embodiment, judging whether a current use situation of the terminal satisfies an alarm condition includes:
if detecting that an operation which is being performed by the current user of the terminal belongs to the designated restricted operation, judging that the current use situation of the terminal satisfies the alarm condition; or
if the similarity between the voiceprint characteristics of the current user of the terminal and the voiceprint model of the owner of the terminal is lower than an alarm threshold, judging that the current use situation of the terminal satisfies the alarm condition, herein the monitoring threshold is greater than the alarm threshold; or
if an opposite-end contact with whom the current user of the terminal is communicating belongs to a preset important contact, judging that the current use situation of the terminal satisfies the alarm condition.

In an exemplary embodiment, the performing security protection processing on the terminal further includes:
collecting additional information of the use situation of the terminal and carrying the additional information in the monitoring information.

In an exemplary embodiment, the collecting additional information of the use situation of the terminal includes performing one or more of the following processing:
positioning and recording a current location of the terminal, taking a picture of the user of the terminal, recording information about the opposite-end contact with whom the current user of the terminal communicates, and recording a name and use time of an application program used by the user of the terminal.

In an exemplary embodiment, the method further includes:
when detecting that the user of the terminal sets an important contact, saving information about the important contact; and/or
when detecting that the user of the terminal sets a restricted operation, saving information about the designated restricted operation; and/or
when detecting that the user of the terminal sets personal designated data of the owner of the terminal, saving information about the personal designated data of the owner of the terminal; and/or
when detecting that the user of the terminal sets information about the monitoring end, saving the information about the monitoring end.

In an exemplary embodiment, the designated restricted operation includes one or more of the followings: rooting, deleting a contact, downloading an application program, communicating with an important contact and performing a mobile payment;
the personal designated data of the owner of the terminal include one or more of the followings: a picture, an address book and a short message; and
the monitoring end includes one or more of the followings: a mailbox of the owner of the terminal, and a cloud account of the owner of the terminal, and other communication device capable of communicating with the terminal.

In an exemplary embodiment, when there are multiple owners of the terminal, matching the extracted voiceprint characteristic information of the current user of the terminal with a pre-saved voiceprint model of an owner of the terminal and judging whether the current user of the terminal is the owner of the terminal includes:
matching the extracted voiceprint characteristic data of the current user of the terminal with a pre-saved voiceprint model of each owner of the terminal and calculating a similarity between the voiceprint characteristics of the current user of the terminal and the voiceprint model of each owner of the terminal; and
if the similarity between the voiceprint characteristics of the current user of the terminal and the voiceprint model of any one owner of the terminal is higher than or equal to a monitoring threshold corresponding to the owner of the terminal, judging that the current user of the terminal is the owner of the terminal; and if the similarity between the voiceprint characteristics of the current user of the terminal and the voiceprint model of each owner of the terminal is lower than the monitoring threshold corresponding to the owner of the terminal, judging that the current user of the terminal is not the owner of the terminal, herein monitoring thresholds corresponding to different owners of the terminal are the same or different.

In an exemplary embodiment, the method further includes: collecting voice training data of each owner of the terminal, extracting voiceprint characteristics from the voice training data, and establishing a voiceprint model corresponding to the owner of the terminal according to the extracted voiceprint characteristics and saving the voiceprint model.

In an exemplary embodiment, the monitoring information includes voice information of the current user of the terminal.

An embodiment of the present invention further provides a voiceprint-recognition-based security protection device, including a voice collection module, a voiceprint recognition module and a security protection module.

The voice collection module is configured to collect voice data of a current user of a terminal and extract voiceprint characteristic information from the voice data.

The voiceprint recognition module is configured to match the extracted voiceprint characteristic information of the current user of the terminal with a pre-saved voiceprint model of an owner of the terminal, and judge whether the current user of the terminal is the owner of the terminal.

The security protection module is configured to, when judging that the current user of the terminal is not the owner of the terminal, perform security protection processing on the terminal.

In an exemplary embodiment, the voiceprint recognition module is configured to match the extracted voiceprint characteristic information of the current user of the terminal with a pre-saved voiceprint model of an owner of the terminal and judge whether the current user of the terminal is the owner of the terminal by adopting the following mode:
matching the extracted voiceprint characteristic data of the current user of the terminal with the pre-saved voiceprint model of the owner of the terminal and calculating a similarity between voiceprint characteristics of the current user of the terminal and the voiceprint model of the owner of the terminal; and
if the similarity between the voiceprint characteristics of the current user of the terminal and the voiceprint model of the owner of the terminal is higher than or equal to a monitoring threshold, judging that the current user of the terminal is the owner of the terminal; and if the similarity between the voiceprint characteristics of the current user of the terminal and the voiceprint model of the owner of the terminal is lower than the monitoring threshold, judging that the current user of the terminal is not the owner of the terminal.

In an exemplary embodiment, the device further includes:
a voiceprint model establishment module configured to collect voice training data of the owner of the terminal, extract voiceprint characteristics from the voice training data, and establish a voiceprint model according to the extracted voiceprint characteristics and save the voiceprint model.

In an exemplary embodiment, the security protection module is configured to perform security protection processing on the terminal by adopting the following mode:
sending monitoring information to a preset monitoring end, starting a timer, and if an instruction returned by the monitoring end is received before the timer times out, performing corresponding security protection processing according to the received instruction; and if any instruction returned by the monitoring end is still not received until the timer times out, when judging that a current use situation of the terminal satisfies an alarm condition, performing super screen locking processing on the terminal, herein the terminal after super screen locking is only capable of being unlocked by the owner of the terminal through a voice.

In an exemplary embodiment, the security protection module is configured to perform corresponding security protection processing according to the received instruction by adopting the following mode:
when the instruction returned by the monitoring end is to perform super screen locking, performing the super screen locking processing on the terminal, herein the terminal after the super screen locking is only capable of being unlocked by the owner of the terminal through the voice; and/or
when the instruction returned by the monitoring end is to perform data protection, deleting personal designated data of the owner of the terminal saved in the terminal; and/or
when the instruction returned by the monitoring end is to enter a security mode, restricting the current user of the terminal to performing a designated restricted operation.

In an exemplary embodiment, the security protection module is configured to judge whether a current use situation of the terminal satisfies an alarm condition by adopting the following mode:
if detecting that an operation which is being performed by the current user of the terminal belongs to the designated restricted operation, judging that the current use situation of the terminal satisfies the alarm condition; or
if the similarity between the voiceprint characteristics of the current user of the terminal and the voiceprint characteristics of the owner of the terminal is lower than an alarm threshold, judging that the current use situation of the terminal satisfies the alarm condition, herein the monitoring threshold is greater than the alarm threshold; or
if an opposite-end contact with whom the current user of the terminal is communicating belongs to a preset important contact, judging that the current use situation of the terminal satisfies the alarm condition.

In an exemplary embodiment, the security protection module is configured to perform security protection processing on the terminal by adopting the following mode:
collecting additional information of the use situation of the terminal and carrying the additional information in the monitoring information.

In an exemplary embodiment, the security protection module is configured to collect additional information of the use situation of the terminal by adopting the following mode: performing one or more of the following processing: positioning and recording a current location of the terminal, taking a picture of the user of the terminal, recording information about the opposite-end contact with whom the current user of the terminal communicates, and recording a name and use time of an application program used by the user of the terminal.

In an exemplary embodiment, the device further includes:
a setting module configured to, when detecting that the user of the terminal sets an important contact, save information about the important contact; and/or
when detecting that the user of the terminal sets a restricted operation, save information about the designated restricted operation; and/or
when detecting that the user of the terminal sets personal designated data of the owner of the terminal, save information about the personal designated data of the owner of the terminal; and/or
when detecting that the user of the terminal sets information about the monitoring end, save the information about the monitoring end.

In an exemplary embodiment, the designated restricted operation includes one or more of the followings: rooting, deleting a contact, downloading an application program, communicating with an important contact and performing a mobile payment;
the personal designated data of the owner of the terminal include one or more of the followings: a picture, an address book and a short message; and
the monitoring end includes one or more of the followings: a mailbox of the owner of the terminal, and a cloud account of the owner of the terminal, and other communication device capable of communicating with the terminal.

In an exemplary embodiment, the voiceprint recognition module is configured to, when there are multiple owners of the terminal, match the extracted voiceprint characteristic information of the current user of the terminal with a pre-saved voiceprint model of an owner of the terminal and judge whether the current user of the terminal is the owner of the terminal by adopting the following mode:
matching the extracted voiceprint characteristic data of the current user of the terminal with a pre-saved voiceprint model of each owner of the terminal and calculating a similarity between voiceprint characteristics of the current user of the terminal, and the voiceprint model of each owner of the terminal; and
if the similarity between the voiceprint characteristics of the current user of the terminal and the voiceprint model of any one owner of the terminal is higher than or equal to a monitoring threshold corresponding to the owner of the terminal, judging that the current user of the terminal is the owner of the terminal; and if the similarity between the voiceprint characteristics of the current user of the terminal and the voiceprint model of each owner of the terminal is lower than the monitoring threshold corresponding to the owner of the terminal, judging that the current user of the terminal is not the owner of the terminal, herein monitoring thresholds corresponding to different owners of the terminal are the same or different.

In an exemplary embodiment, the device further includes:
a voiceprint model establishment module configured to collect voice training data of each owner of the terminal, extract voiceprint characteristics from the voice training data, and establish a voiceprint model corresponding to the owner of the terminal according to the extracted voiceprint characteristics and save the voiceprint model.

In an exemplary embodiment, the monitoring information includes voice information of the current user of the terminal.

An embodiment of the present invention further provides a computer-readable storage medium where program instructions are stored, and when being executed, the program instructions are capable of implementing the voiceprint-recognition-based security protection method.

According to the technical solution provided by embodiments of the present invention, the voice data of the current user of the terminal is collected, and voiceprint matching is performed, and the monitoring information is recorded and reported after it is judged that the user of the terminal is not the owner of the terminal, and security protection measures are taken to prevent the terminal from being fraudulently used and the owner of the terminal from suffering a loss.

After the drawings and detailed description are read and understood, other aspects may be understood.

### Brief Description of Drawings

FIG. 1 illustrates a flowchart of a voiceprint-recognition-based security protection method according to an embodiment of the present invention.
FIG. 2 illustrates a structural schematic diagram of a voiceprint-recognition-based security protection device according to an embodiment of the present invention.

### Detailed Description

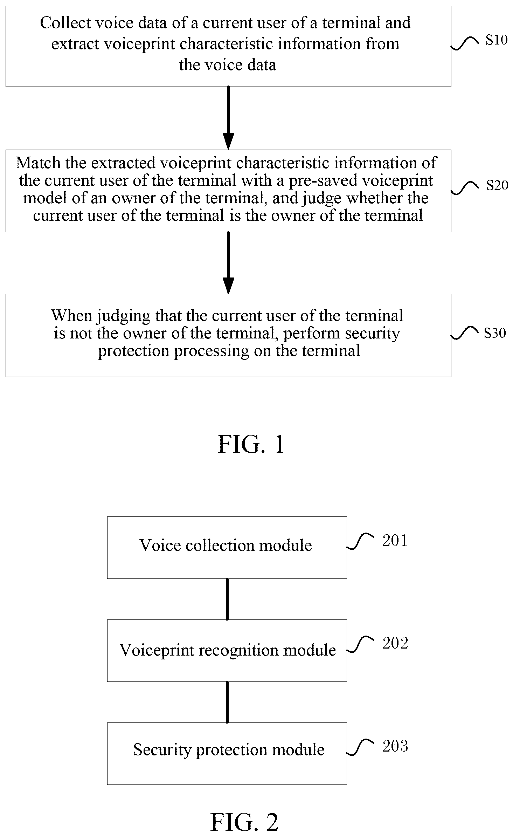

As illustrated in FIG. 1, an embodiment of the present invention provides a voiceprint-recognition-based security protection method, including the following steps S10-S30.

In step S10, voice data of a current user of a terminal is collected, and voiceprint characteristic information is extracted from the voice data.

In step S20, the extracted voiceprint characteristic information of the current user of the terminal is matched with a pre-saved voiceprint model of an owner of the terminal, and whether the current user of the terminal is the owner of the terminal is judged.

In step S30, when it is judged that the current user of the terminal is not the owner of the terminal, security protection processing is performed on the terminal.

Herein, that voice data of a current user of a terminal is collected includes:
if a microphone of the terminal detects a voice signal, the voice signal collected by the microphone of the terminal at current is saved.

Herein, that voiceprint characteristic information is extracted from the voice data includes extracting MFCC (Mel-Frequency Cepstral Coefficients) characteristic information from the voice data. Other types of voiceprint characteristic information may also be extracted from the voice data, and the voiceprint characteristic information is not limited to the MFCC characteristic information.

Herein, the step of S20 further includes the following operations.

The extracted voiceprint characteristic data of the current user of the terminal is matched with the pre-saved voiceprint model of the owner of the terminal and a similarity between voiceprint characteristics of the current user of the terminal and the voiceprint model of the owner of the terminal is calculated.

If the similarity between the voiceprint characteristics of the current user of the terminal and the voiceprint model of the owner of the terminal is higher than or equal to a monitoring threshold, it is judged that the current user of the terminal is the owner of the terminal. If the similarity between the voiceprint characteristics of the current user of the terminal and the voiceprint model of the owner of the terminal is lower than the monitoring threshold, it is judged that the current user of the terminal is not the owner of the terminal.

In an embodiment, voice training data of the owner of the terminal is collected in advance, and voiceprint characteristics are extracted from the voice training data, and a voiceprint model is established according to the extracted voiceprint characteristics and the voiceprint model is saved.

In an embodiment, there are one or more owners of the terminal.

When there are multiple owners of the terminal, that the extracted voiceprint characteristic information of the current user of the terminal is matched with a pre-saved voiceprint model of an owner of the terminal and whether the current user of the terminal is the owner of the terminal is judged includes the following operations.

The extracted voiceprint characteristic data of the current user of the terminal is matched with a pre-saved voiceprint model of each owner of the terminal. A similarity between voiceprint characteristics of the current user of the terminal and the voiceprint model of each owner of the terminal is calculated.

If the similarity between the voiceprint characteristics of the current user of the terminal and the voiceprint model of any one owner of the terminal is higher than or equal to a monitoring threshold corresponding to the owner of the terminal, it is judged that the current user of the terminal is the owner of the terminal. If the similarity between the voiceprint characteristics of the current user of the terminal and the voiceprint model of each owner of the terminal is lower than the monitoring threshold corresponding to the owner of the terminal, it is judged that the current user of the terminal is not the owner of the terminal. Herein, monitoring thresholds corresponding to different owners of the terminal are the same or different.

Voice training data of each owner of the terminal is collected in advance, and voiceprint characteristics are extracted from the voice training data, and a voiceprint model corresponding to the owner of the terminal is established according to the extracted voiceprint characteristics and the voiceprint model is saved.

Herein, that security protection processing is performed on the terminal includes the following operations.

Monitoring information is sent to a preset monitoring end, and a timer is started. If an instruction returned by the monitoring end is received before the timer times out, a corresponding security protection processing is performed according to the received instruction. If any instruction returned by the monitoring end is still not received until the timer times out, when it is judged that a current use situation of the terminal satisfies an alarm condition, a super screen locking processing is performed on the terminal. Herein the terminal after super screen locking is only capable of being unlocked by the owner of the terminal through a voice.

In addition to that super screen locking processing has a screen locking function, the super screen locking processing can also close an application program which is being used by the current user of the terminal.

The monitoring information includes voice information of the current user of the terminal.

The monitoring information is not limited to the voice information of the current user of the terminal and may also include other information, such as a name of an application program which is used by the current user of the terminal, and information about an opposite-end contact with whom the current user of the terminal is communicating and the like. Other information except the voice information of the current user of the terminal may be used as additional information.

Herein, that corresponding security protection processing is performed according to the received instruction includes at least one of following processings.

When the instruction returned by the monitoring end is to perform super screen locking, a super screen locking processing is performed on the terminal, herein the terminal after super screen locking is only capable of being unlocked by the owner of the terminal through a voice.

When the instruction returned by the monitoring end is to perform data protection, a deleting processing for personal designated data of the owner of the terminal saved in the terminal is performed.

When the instruction returned by the monitoring end is to enter a security mode, a restriction processing for the current user of the terminal to execute a designated restricted operation is performed.

Herein, the instruction returned by the monitoring end is not limited to the several instructions listed above, and these instructions may be flexibly defined according to actual situations.

In an embodiment, that security protection processing is performed on the terminal further includes that:
additional information about the use situation of the terminal is collected and the additional information is carried in the monitoring information.

Herein, that additional information about the use situation of the terminal is collected may include performing one or more of the following processing: positioning and recording a current location of the terminal, taking a picture of the user of the terminal, recording information about the opposite-end contact with whom the current user of the terminal communicates, and recording a name and use time of an application program used by the user of the terminal.

The method of collecting the additional information of the use situation of the terminal is not limited to the situations listed above.

Herein, judging whether a current use situation of the terminal satisfies an alarm condition includes one of the following situations.

If it is detected that an operation which is being performed by the current user of the terminal belongs to a designated restricted operation, the current use situation of the terminal is judged to satisfy the alarm condition.

If the similarity between the voiceprint characteristics of the current user of the terminal and the voiceprint characteristics of the owner of the terminal is lower than an alarm threshold, the current use situation of the terminal is judged to satisfy the alarm condition. Herein, the monitoring threshold is greater than the alarm threshold.

If an opposite-end contact with whom the current user of the terminal is communicating belongs to a preset important contact, the current use situation of the terminal is judged to satisfy the alarm condition.

The alarm conditions are not limited to the several alarm conditions listed above and may be flexibly set according to actual situations.

The method further includes at least one of the following operations.

When it is detected that the user of the terminal sets an important contact, information about the important contact is saved.

When it is detected that the user of the terminal sets a restricted operation, information about the designated restricted operation is saved.

When it is detected that the user of the terminal sets personal designated data of the owner of the terminal, information about the personal designated data of the owner of the terminal is saved.

When it is detected that the user of the terminal sets information about the monitoring end, the information about the monitoring end is saved.

In an embodiment, the designated restricted operation includes one or more of the followings: rooting, deleting a contact, downloading an application program, communicating with an important contact, and performing a mobile payment. The designated restricted operation is not limited to the situations listed above.

In an embodiment, the personal designated data of the owner of the terminal may include one or more of the followings: a picture, an address book and a short message; and the personal designated data of the owner of the terminal are not limited to the types listed above.

The monitoring end includes one or more of the followings: a mailbox of the owner of the terminal, and a cloud account of the owner of the terminal and other communication device capable of communicating with the terminal. Other communication device is, for example, a smart wristband, a mobile phone or the like.

As illustrated in FIG. 2, an embodiment of the present invention provides a voiceprint-recognition-based security protection device, including a voice collection module 201, a voiceprint recognition module 202 and a security protection module 203.

The voice collection module 201 is configured to collect voice data of a current user of a terminal and extract voiceprint characteristic information from the voice data.

The voiceprint recognition module 202 is configured to match the extracted voiceprint characteristic information of the current user of the terminal with a pre-saved voiceprint model of an owner of the terminal, and to judge whether the current user of the terminal is the owner of the terminal.

The security protection module 203 is configured to, when judging that the current user of the terminal is not the owner of the terminal, perform security protection processing on the terminal.

Herein, the voiceprint recognition module 202 is configured to match the extracted voiceprint characteristic information of the current user of the terminal with a pre-saved voiceprint model of an owner of the terminal and judge whether the current user of the terminal is the owner of the terminal by adopting the following mode.

The extracted voiceprint characteristic data of the current user of the terminal is matched with the pre-saved voiceprint model of the owner of the terminal, and a similarity between voiceprint characteristics of the current user of the terminal and the voiceprint model of the owner of the terminal is calculated.

If the similarity between the voiceprint characteristics of the current user of the terminal and the voiceprint model of the owner of the terminal is higher than or equal to a monitoring threshold, it is judged that the current user of the terminal is the owner of the terminal. If the similarity between the voiceprint characteristics of the current user of the terminal and the voiceprint model of the owner of the terminal is lower than the monitoring threshold, it is judged that the current user of the terminal is not the owner of the terminal.

Herein, the security protection module 203 is configured to perform security protection processing on the terminal by adopting the following mode.

Monitoring information is sent to a preset monitoring end, and a timer is started. If an instruction returned by the monitoring end is received before the timer times out, a corresponding security protection processing is performed according to the received instruction. If any instruction returned by the monitoring end is still not received until the timer times out, when it is judged that a current use situation of the terminal satisfies an alarm condition, a super screen locking processing is performed on the terminal. Herein the terminal after super screen locking is only capable of being unlocked by the owner of the terminal through a voice.

In addition to that super screen locking processing has a screen locking function, the super screen locking processing may also close an application program which is being used by the current user of the terminal.

Herein, the security protection module 203 is configured to perform corresponding security protection processing according to the received instruction by adopting at least one of the following modes.

When the instruction returned by the monitoring end is to perform super screen locking, a super screen locking processing is performed on the terminal, herein the terminal after super screen locking is only capable of being unlocked by the owner of the terminal through voices.

When the instruction returned by the monitoring end is to perform data protection, a deleting processing for personal designated data of the owner of the terminal saved in the terminal is performed.

When the instruction returned by the monitoring end is to enter a security mode, a restriction processing for the current user of the terminal to execute a designated restricted operation is performed.

The security protection module 203 is configured to judge whether a current use situation of the terminal satisfies an alarm condition by adopting one of the following modes.

If it is detected that an operation which is being performed by the current user of the terminal belongs to the designated restricted operation, the current use situation of the terminal is judged to satisfy the alarm condition.
if the similarity between the voiceprint characteristics of the current user of the terminal and the voiceprint characteristics of the owner of the terminal is lower than an alarm threshold, the current use situation of the terminal is judged to satisfy the alarm condition. Herein, the monitoring threshold is greater than the alarm threshold.

If an opposite-end contact with whom the current user of the terminal is communicating belongs to a preset important contact, the current use situation of the terminal is judged to satisfy the alarm condition.

Herein, the security protection module 203 is configured to perform security protection processing to the terminal by adopting the following mode:
collecting additional information of the use situation of the terminal and carrying the additional information in the monitoring information.

The security protection module 203 is configured to collect additional information of the use situation of the terminal by adopting the following mode: performing one or more of the following processing: positioning and recording a current location of the terminal, taking a picture of the user of the terminal, recording information about the opposite-end contact with whom the current user of the terminal communicates, and recording a name and use time of an application program used by the user of the terminal.

The device further includes a setting module 204.

The setting module 204 is configured to, when detecting that the user of the terminal sets an important contact, save information about the important contact; and/or
when detecting that the user of the terminal sets a restricted operation, save information about the designated restricted operation; and/or
when detecting that the user of the terminal sets personal designated data of the owner of the terminal, save information about the personal designated data of the owner of the terminal; and/or
when detecting that the user of the terminal sets information about the monitoring end, save the information about the monitoring end.

The designated restricted operation includes one or more of the followings: rooting, deleting a contact, downloading an application program, communicating with an important contact and performing a mobile payment.

The personal designated data of the owner of the terminal include one or more of the followings: a picture, an address book and a short message.

The monitoring end includes one or more of the followings: a mailbox the owner of the terminal, a cloud account of the owner of the terminal and other communication device capable of communicating with the terminal, herein other communication device is, for example, a smart wristband, a mobile phone or the like.

When there are multiple owners of the terminal, the voiceprint recognition module 202 is configured to match the extracted voiceprint characteristic information of the current user of the terminal with pre-saved voiceprint characteristic information of an owner of the terminal and judge whether the current user of the terminal is the owner of the terminal by adopting the following mode.

The extracted voiceprint characteristic data of the current user of the terminal is matched with a pre-saved voiceprint model of each owner of the terminal, and a similarity between voiceprint characteristics of the current user of the terminal and the voiceprint model of each owner of the terminal is calculated.

If the similarity between the voiceprint characteristics of the current user of the terminal and the voiceprint model of any one owner of the terminal is higher than or equal to a monitoring threshold corresponding to the owner of the terminal, it is judged that the current user of the terminal is the owner of the terminal. If the similarity between the voiceprint characteristics of the current user of the terminal and the voiceprint model of each owner of the terminal is lower than the monitoring threshold corresponding to the owner of the terminal, it is judged that the current user of the terminal is not the owner of the terminal. Herein, monitoring thresholds corresponding to different owners of the terminal are the same or different.

The device further includes a voiceprint model establishment module 204.

The voiceprint model establishment module 204 is configured to collect voice training data of each owner of the terminal, extract voiceprint characteristics from the voice training data, and establish a voiceprint model corresponding to the owner of the terminal according to the extracted voiceprint characteristics and save the voiceprint model.

Herein, the monitoring information includes voice information of the current user of the terminal. The monitoring information is not limited to the voice information of the current user of the terminal and may also include other information, such as a name of an application program which is used by the current user of the terminal and information about an opposite-end contact with whom the current user of the terminal is communicating and the like. Other information except the voice information of the current user of the terminal may be used as additional information.

One ordinary skilled in the art can understand that all or partial steps in the above-mentioned methods may be completed by relevant hardware instructed by a program, and the program may be stored in a computer readable storage medium such as a read-only memory, a magnetic disc or a compact disc or the like. In an exemplary embodiment, all or partial steps in the above-mentioned embodiments may also be implemented by using one or more integrated circuits. Correspondingly, each module/unit in the above-mentioned embodiments may be implemented by means of hardware and may also be implemented by means of a software function module. The present invention is not limited to combinations of hardware and software in any specific form.

### Industrial Applicability

According to the technical solution provided by the embodiments of the present invention, the voice data of the current user of the terminal is collected, and voiceprint matching is performed, and the monitoring information is recorded and reported after it is judged that the user of the terminal is not the owner of the terminal, and security protection measures are taken to prevent the terminal from being fraudulently used and the owner of the terminal from suffering a loss.

## Claims

1. A voiceprint-recognition-based security protection method, comprising:
collecting voice data of a current user of a terminal and extracting voiceprint characteristic information from the voice data;
matching the extracted voiceprint characteristic information of the current user of the terminal with a pre-saved voiceprint model of an owner of the terminal, and judging whether the current user of the terminal is the owner of the terminal; and
when judging that the current user of the terminal is not the owner of the terminal, performing security protection processing on the terminal.

2. The method according to claim 1, wherein:
the matching the extracted voiceprint characteristic information of the current user of the terminal with a pre-saved voiceprint model of an owner of the terminal, and judging whether the current user of the terminal is the owner of the terminal comprises:
matching the extracted voiceprint characteristic data of the current user of the terminal with the pre-saved voiceprint model of the owner of the terminal, and calculating a similarity between voiceprint characteristics of the current user of the terminal and the voiceprint model of the owner of the terminal; and
if the similarity between the voiceprint characteristics of the current user of the terminal and the voiceprint model of the owner of the terminal is higher than or equal to a monitoring threshold, judging that the current user of the terminal is the owner of the terminal; and if the similarity between the voiceprint characteristics of the current user of the terminal and the voiceprint model of the owner of the terminal is lower than the monitoring threshold, judging that the current user of the terminal is not the owner of the terminal; and
the method further comprises: collecting voice training data of the owner of the terminal, and extracting voiceprint characteristics from the voice training data, and establishing a voiceprint model according to the extracted voiceprint characteristics and saving the voiceprint model.

3. The method according to claim 1, wherein:
the performing security protection processing on the terminal comprises:
sending monitoring information to a preset monitoring end, starting a timer, and if an instruction returned by the monitoring end is received before the timer times out, performing corresponding security protection processing according to the received instruction; and if any instruction returned by the monitoring end is still not received until the timer times out, when judging that a current use situation of the terminal satisfies an alarm condition, performing super screen locking processing on the terminal, wherein the terminal after super screen locking is only capable of being unlocked by the owner of the terminal through a voice.

4. The method according to claim 3, wherein:
the performing corresponding security protection processing according to the received instruction comprises:
when the instruction returned by the monitoring end is to perform super screen locking, performing the super screen locking processing on the terminal; and/or
when the instruction returned by the monitoring end is to perform data protection, deleting personal designated data of the owner of the terminal saved in the terminal; and/or
when the instruction returned by the monitoring end is to enter a security mode, restricting the current user of the terminal to performing a designated restricted operation.

5. The method according to claim 3, wherein:
the judging whether a current use situation of the terminal satisfies an alarm condition comprises:
if detecting that an operation which is being performed by the current user of the terminal belongs to the designated restricted operation, judging that the current use situation of the terminal satisfies the alarm condition; or
if the similarity between the voiceprint characteristics of the current user of the terminal and the voiceprint model of the owner of the terminal is lower than an alarm threshold, judging that the current use situation of the terminal satisfies the alarm condition, wherein the monitoring threshold is greater than the alarm threshold; or
if an opposite-end contact with whom the current user of the terminal is communicating belongs to a preset important contact, judging that the current use situation of the terminal satisfies the alarm condition.

6. The method according to claim 3, wherein:
in the step of performing security protection processing on the terminal, the step further comprises:
collecting additional information of the use situation of the terminal, and carrying the additional information in the monitoring information.

7. The method according to claim 6, wherein:
the collecting additional information of the use situation of the terminal comprises performing one or more of the following processing:
positioning and recording a current location of the terminal, taking a picture of the user of the terminal, recording information about the opposite-end contact with whom the current user of the terminal communicates, and recording a name and use time of an application program used by the user of the terminal.

8. The method according to claim 4 or 5, wherein the method further comprises:
when detecting that the user of the terminal sets an important contact, saving information about the important contact; and/or
when detecting that the user of the terminal sets a restricted operation, saving information about the designated restricted operation; and/or
when detecting that the user of the terminal sets personal designated data of the owner of the terminal, saving information about the personal designated data of the owner of the terminal; and/or
when detecting that the user of the terminal sets information about the monitoring end, saving the information about the monitoring end.

9. The method according to claim 8, wherein:
the designated restricted operation comprises one or more of the followings: rooting, deleting a contact, downloading an application program, communicating with an important contact and performing a mobile payment;
the personal designated data of the owner of the terminal comprise one or more of the followings: a picture, an address book and a short message; and
the monitoring end comprises one or more of the followings: a mailbox of the owner of the terminal, and a cloud account of the owner of the terminal, and other communication device capable of communicating with the terminal.

10. The method according to claim 1, wherein:
when there are a plurality of owners of the terminal, the matching the extracted voiceprint characteristic information of the current user of the terminal with a pre-saved voiceprint model of an owner of the terminal and judging whether the current user of the terminal is the owner of the terminal comprises:
matching the extracted voiceprint characteristic data of the current user of the terminal with a pre-saved voiceprint model of each owner of the terminal, and calculating a similarity between the voiceprint characteristics of the current user of the terminal and the voiceprint model of each owner of the terminal; and
if the similarity between the voiceprint characteristics of the current user of the terminal and the voiceprint model of any one owner of the terminal is higher than or equal to a monitoring threshold corresponding to the owner of the terminal, judging that the current user of the terminal is the owner of the terminal; and if the similarity between the voiceprint characteristics of the current user of the terminal and the voiceprint model of each owner of the terminal is lower than the monitoring threshold corresponding to the owner of the terminal, judging that the current user of the terminal is not the owner of the terminal, wherein monitoring thresholds corresponding to different owners of the terminal are same or different; and
the method further comprises: collecting voice training data of each owner of the terminal, extracting voiceprint characteristics from the voice training data, and establishing a voiceprint model corresponding to the owner of the terminal according to the extracted voiceprint characteristics and saving the voiceprint model.

11. The method according to any one of claims 3-7, wherein:
the monitoring information comprises voice information of the current user of the terminal.

12. A voiceprint-recognition-based security protection device, comprising:
a voice collection module configured to collect voice data of a current user of a terminal and extract voiceprint characteristic information from the voice data;
a voiceprint recognition module configured to match the extracted voiceprint characteristic information of the current user of the terminal with a pre-saved voiceprint model of an owner of the terminal, and judge whether the current user of the terminal is the owner of the terminal; and
a security protection module configured to, when judging that the current user of the terminal is not the owner of the terminal, perform security protection processing on the terminal.

13. The device according to claim 12, wherein:
the voiceprint recognition module is configured to match the extracted voiceprint characteristic information of the current user of the terminal with a pre-saved voiceprint model of an owner of the terminal, and judge whether the current user of the terminal is the owner of the terminal by adopting the following mode:
matching the extracted voiceprint characteristic data of the current user of the terminal with the pre-saved voiceprint model of the owner of the terminal and calculating a similarity between voiceprint characteristics of the current user of the terminal and the voiceprint model of the owner of the terminal; and
if the similarity between the voiceprint characteristics of the current user of the terminal and the voiceprint model of the owner of the terminal is higher than or equal to a monitoring threshold, judging that the current user of the terminal is the owner of the terminal; and if the similarity between the voiceprint characteristics of the current user of the terminal and the voiceprint model of the owner of the terminal is lower than the monitoring threshold, judging that the current user of the terminal is not the owner of the terminal; and
the device further comprises:
a voiceprint model establishment module configured to collect voice training data of the owner of the terminal, extract voiceprint characteristics from the voice training data, and establish a voiceprint model according to the extracted voiceprint characteristics and save the voiceprint model.

14. The device according to claim 12, wherein:
the security protection module is configured to perform security protection processing on the terminal by adopting the following mode:
sending monitoring information to a preset monitoring end, starting a timer, and if an instruction returned by the monitoring end is received before the timer times out, performing corresponding security protection processing according to the received instruction; and if any instruction returned by the monitoring end is still not received until the timer times out, when judging that a current use situation of the terminal satisfies an alarm condition, performing super screen locking processing on the terminal, wherein the terminal after super screen locking is only capable of being unlocked by the owner of the terminal through a voice.

15. The device according to claim 14, wherein:
the security protection module is configured to perform corresponding security protection processing according to the received instruction by adopting the following mode:
when the instruction returned by the monitoring end is to perform super screen locking, performing the super screen locking processing on the terminal, wherein the terminal after the super screen locking is only capable of being unlocked by the owner of the terminal through the voice; and/or
when the instruction returned by the monitoring end is to perform data protection, deleting personal designated data of the owner of the terminal saved in the terminal; and/or
when the instruction returned by the monitoring end is to enter a security mode, restricting the current user of the terminal to performing a designated restricted operation.

16. The device according to claim 14, wherein:
the security protection module is configured to judge whether a current use situation of the terminal satisfies an alarm condition by adopting the following mode:
if detecting that an operation which is being performed by the current user of the terminal belongs to the designated restricted operation, judging that the current use situation of the terminal satisfies the alarm condition; or
if the similarity between the voiceprint characteristics of the current user of the terminal and the voiceprint characteristics of the owner of the terminal is lower than an alarm threshold, judging that the current use situation of the terminal satisfies the alarm condition, wherein the monitoring threshold is greater than the alarm threshold; or
if an opposite-end contact with whom the current user of the terminal is communicating belongs to a preset important contact, judging that the current use situation of the terminal satisfies the alarm condition.

17. The device according to claim 14, wherein:
the security protection module is configured to perform security protection processing on the terminal by adopting the following mode:
collecting additional information of the use situation of the terminal, and carrying the additional information in the monitoring information.

18. The device according to claim 17, wherein:
the security protection module is configured to collect additional information of the use situation of the terminal by adopting the following mode: performing one or more of the following processing: positioning and recording a current location of the terminal, taking a picture of the user of the terminal, recording information about the opposite-end contact with whom the current user of the terminal communicates, and recording a name and use time of an application program used by the user of the terminal.

19. The device according to claim 15 or 16, wherein the device further comprises:
a setting module configured to, when detecting that the user of the terminal sets an important contact, save information about the important contact; and/or
when detecting that the user of the terminal sets a restricted operation, save information about the designated restricted operation; and/or
when detecting that the user of the terminal sets personal designated data of the owner of the terminal, save information about the personal designated data of the owner of the terminal; and/or
when detecting that the user of the terminal sets information about the monitoring end, save the information about the monitoring end.

20. The device according to claim 19, wherein:
the designated restricted operation comprises one or more of the followings: rooting, deleting a contact, downloading an application program, communicating with an important contact and performing a mobile payment;
the personal designated data of the owner of the terminal comprise one or more of the followings: a picture, an address book and a short message; and
the monitoring end comprises one or more of the followings: a mailbox of the owner of the terminal, and a cloud account of the owner of the terminal, and other communication device capable of communicating with the terminal.

21. The device according to claim 12, wherein:
the voiceprint recognition module is configured to, when there are a plurality of owners of the terminal, match the extracted voiceprint characteristic information of the current user of the terminal with a pre-saved voiceprint model of an owner of the terminal, and judge whether the current user of the terminal is the owner of the terminal by adopting the following mode:
matching the extracted voiceprint characteristic data of the current user of the terminal with a pre-saved voiceprint model of each owner of the terminal, and calculating a similarity between voiceprint characteristics of the current user of the terminal and the voiceprint model of each owner of the terminal; and
if the similarity between the voiceprint characteristics of the current user of the terminal and the voiceprint model of any one owner of the terminal is higher than or equal to a monitoring threshold corresponding to the owner of the terminal, judging that the current user of the terminal is the owner of the terminal; and if the similarity between the voiceprint characteristics of the current user of the terminal and the voiceprint model of each owner of the terminal is lower than the monitoring threshold corresponding to the owner of the terminal, judging that the current user of the terminal is not the owner of the terminal, wherein monitoring thresholds corresponding to different owners of the terminal are same or different; and
the device further comprises:
a voiceprint model establishment module configured to collect voice training data of each owner of the terminal, extract voiceprint characteristics from the voice training data, and establish a voiceprint model corresponding to the owner of the terminal according to the extracted voiceprint characteristics and save the voiceprint model.

22. The device according to any one of claims 14-18, wherein:
the monitoring information comprises voice information of the current user of the terminal.

23. A computer-readable storage medium where program instructions are stored, wherein when being executed, the program instructions are capable of implementing the method according to any one of claims 1-11.
